(19) Europäisches Patentamt
European Patent Office
Office européen des brevets

(11) Publication number: 0 176 636 B1

(12) EUROPEAN PATENT SPECIFICATION

(45) Date of publication of patent specification: 09.05.90

(51) Int. Cl.[5]: B 05 D 1/00, B 05 D 7/24, C 08 G 61/04, G 11 B 5/72

(21) Application number: 84306678.8

(22) Date of filing: 28.09.84

# (54) Polymeric thin film and products containing the same.

(43) Date of publication of application:
09.04.86 Bulletin 86/15

(45) Publication of the grant of the patent:
09.05.90 Bulletin 90/19

(84) Designated Contracting States:
DE GB

(56) References cited:
PATENTS ABSTRACTS OF JAPAN, vol. 8, no. 15(C-206)(1452), 21st January 1984, page 19 C 206; & JP - A - 58 180 503 (NIPPON GOSEI GOMU K.K.) 22-10-1983

PATENTS ABSTRACTS OF JAPAN, vol. 7, no. 118(C-167)(1263), 21st May 1983, page 106 C 167; & JP - A - 58 38701 (NIPPON GOSEI GOMU K.K.) 07-03-1983

IBM TECHNICAL DISCLOSURE BULLETIN, vol. 19, no. 4, September 1976, page 1400, New York, US; J.W.COBURN et al.: "H2 - promoted plasma polymerization of saturated fluorocarbons"

(73) Proprietor: JAPAN SYNTHETIC RUBBER CO., LTD.
11-24, Tsukiji-2-chome Chuo-ku
Tokyo 104 (JP)

(73) Proprietor: FUJI PHOTO FILM CO., LTD.
210 Nakanuma Minamiashigara-shi
Kanagawa-ken, 250-01 (JP)

(72) Inventor: Yanagihara, Kenji
JSR 1-305, 29, Aobadai 2-chome Midori-ku
Yokohama-shi Kanagawa-ken, 227 (JP)
Inventor: Kimura, Mituo
JSR 1-304, 29, Aobadai 2-chome Midori-ku
Yokohama-shi Kanagawa-ken, 227 (JP)
Inventor: Niinomi, Masahiro
76-9, Kogasaka
Machida-shi Tokyo, 194 (JP)

(74) Representative: Tubby, David George et al
MARKS & CLERK 57-60 Lincoln's Inn Fields
London WC2A 3LS (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 176 636 B1

Courier Press, Leamington Spa, England.

**Description**

This invention relates to a novel polymeric thin film and products containing said thin film.

Processes for preparing polymeric thin films, by subjecting a saturated or unsaturated hydrocarbon gas to plasma polymerization, are known [H. Yasuda, Contemporary Topics in Polymer Science, Vol. 3,103 (1979), edited by M. Shen, Plenum Publishing Corp.]. The polymeric thin films obtained by these processes, which have higher crosslinking density and also greater mechanical strength than conventional plastics, promise to be useable as surface protective films or surface hardening films on various kinds of articles. However, for some uses, these thin films have inadequate hardness and toughness and therefore cannot be used as protective films, etc. For example, attempts have been made to use a plasma-polymerized film as a protective film on a magnetic recording medium (such as video tape, which comprises a thin film of a magnetic metal on a non-magnetic support). Such a magnetic recording medium is subjected to frictional contact with the magnetic head, the guide pole, etc. during running and therefore the protective film on it must have a high scratch resistance so that scratches will not be readily formed. Also, particularly in the case of video tapes, mechanical impacts are applied repeatedly to the magnetic recording medium during reproduction of still images, to that it must have high durability. If the durability is low, the "still life time" of the magnetic recording medium (which is the time after initiation of reproduction of the still image until the whole image disappears due to noise) will be too short. However, where the above-mentioned polymeric thin film is formed on a recording medium, the medium still has poor scratch resistance and a short still life because of the inadequate hardness and toughness of the polymeric thin film.

Most plasma-polymerized films produced from hydrocarbons have densities of from 1 to 1.5 g/cm$^3$, but it is known in the art that, depending on the reaction conditions, plasma polymerization of methane can give a thin film of fairly high hardness [A. Doi et al. Proc. Int'l Ion Engineering Congress — ISIAT '83 & IPAT '83 KYOTO (1983), page 1137]. We experimentally confirmed that a plasma-polymerized film produced from methane may have a density higher than 1.5 g/cm$^3$. However, because of its low toughness, the thin film thus prepared is brittle and liable to crack and is therefore unsuitable as a protective film for products, such as magnetic recording media, which are subjected to harsh conditions. Further, in this case, there is also the drawback that the deposition rate of the thin film is low so that a long time is required for production.

Japanese Patent Publication Kokai No. 180 503/1983 discloses a process for preparing a thin film by the plasma polymerization of at least one mixed monomer gas selected from (A) + (B), (A) + (C), (A) + (B) + (C) and (B) + (C), in which (A) is a halogenated hydrocarbon gas, (B) is a hydrocarbon gas, (C) is hydrogen gas and (D) is a halogen gas, the electron temperature at the site where plasma polymerization is carried out being from 30,000 °K to 90,000 °K and the atomic ratio of halogen atoms to hydrogen atoms in the mixed monomer gas being from 1:2 to 5:1. Although the thin film obtained by this process has a high hardness, it has too low a toughness and is therefore unsuitable for use as a protective film for magnetic recording media for the same reasons as mentioned above regarding plasma-polymerized films obtained from methane.

The invention consists in an amorphous polymeric thin film formed on a substrate, and consisting essentially of carbon (C), hydrogen (H), halogen (X) and oxygen (O) at an atomic ratio of these elements represented by the following formula:

$$C_{1.0}H_{0.005-0.2}X_{0.005-0.2}O_{0.005-0.3}$$

and having a ratio of the number of hydrogen atoms bonded to carbon atoms having a double bond (=C—H) to the number of hydrogen atoms bonded to carbon atoms having only singel bonds (—C—H) of from 0:1 to 0.1:1 and having a density of from 1.6 to 3.5 g/cm$^3$.

The process for preparing said thin film is described in the examples and the figures 1 to 3 together with the corresponding parts of the description.

The polymeric thin film provided by the present invention has the advantages of excellent abrasion resistance, corrosion resistance and weather resistance as well as a low coefficient of friction and gas permeability coefficient, in addition to high hardness and high toughness. Accordingly, it is useful as a protective film, surface hardening film, rust-proofing film, or gas barrier film for various kinds of articles. Further, where the thin film of the present invention is formed on the thin film of magnetic metal of a magnetic recording medium, it is possible to obtain a magnetic recording medium having excellent scratch resistance and a long still life time. Moreover the preparation process of the present invention has the advantage that the deposition rate of the polymeric thin film is great, which enables high productivity to be achieved.

The monomeric compounds forming the gas polymerized by the process may be selected from: (A) halogenated alkanes; (B) alkanes; (C) hydrogen; and (D) halogens in accordance with any of the combinations set forth below:

(1) only A (provided it is not a perhaloalkane);
(2) A and B;
(3) A and C;
(4) A and D;

(5) A, B and C;
(6) A, B and D;
(7) A, C and D;
(8) A, B, C and D;
(9) B and D; or
(10) B, C and D.

In the accompanying drawings, Fig. 1 shows schematically a sectional view of a bell-jar type reactor for use in the process of the present invention; Fig. 2 shows schematically a sectional view of a device for forming a polymeric thin film on the surface of a continuous web, such as base material tape for a magnetic recording medium, according to the process of the present invention; and Fig. 3 is a graph of the change in the concentration ratio of hydrogen fluoride (HF) to hydrogen ($H_2$) monitored in the experiments in Example 6.

Any of the compounds (A) to (D) as described above can be used as the monomer in the process provided that it is gaseous under the reaction conditions as described hereinafter.

The halogenated alkane (A) used is an alkane, namely a saturated aliphatic hydrocarbon, of which at least one hydrogen is substituted by a halogen atom such as fluorine, chlorine, bromine or iodine. It preferably has from 1 to 4, more preferably 1 or 2, carbon atoms and is substituted by fluorine or chlorine. Such compounds include for example, monofluoromethane, difluoromethane, trifluoromethane, tetrafluoromethane, monochloromethane, dichloromethane, trichloromethane, tetrachloromethane, monofluorodichloromethane, monofluoroethane, trifluoroethane, tetrafluoroethane, pentafluoroethane, hexafluoroethane, dichloroethane, tetrachloroethane, hexachloroethane, difluorodichloroethane, trifluorotrichloroethane, monofluoropropane, trifluoropropane, pentafluoropropane, perfluoropropane, dichloropropane, tetrachloropropane, hexachloropropane, perchloropropane, difluorodichloropropane, tetrafluorodichloropropane, monofluorobutane, trifluorobutane, tetrafluorobutane, octafluorobutane, difluorobutane, monofluoroisobutane, difluoroisobutane, pentafluoroisobutane, heptafluoroisobutane, difluoroisobutane, monochloronbutane, tetrachlorobutane, dichloroisobutane, tetrachloroisobutane, monofluorodichlorobutane, difluorodichloroisobutane and tetrafluorodichloroisobutane. Particularly preferable compounds are trifluoromethane, tetrafluoromethane, tetrafluoroethane and hexafluoroethane.

The alkane (B), namely a saturated aliphatic hydrocarbon, used preferably has from 1 to 10, more preferably from 1 to 4, carbon atoms, as exemplified by methane, ethane, propane, butane, pentane, hexane, heptane, octane, nonane, decane and isomers thereof. Particularly preferred are methane, ethane, propane, butane and isobutane.

The halogen (D) which may be used may be fluorine, chlorine, bromine or iodine. Fluorine and chlorine are preferred.

In the process the gas provided for plasma polymerization contains one or more compounds selected from the compounds (A) to (D) in accordance with any of the combinations (1) to (10) set forth above. The atomic ratio of halogen/hydrogen in said gas must be from 0.1:1 to 5:1, preferably from 0.2:1 to 2:1. If this ratio is less than 0.1:1, the thin film obtained has low toughness, although it has a high density and a high hardness. On the contrary, if the above ratio is greater than 5:1, the polymerization rate will be reduced so that a long time is required to obtain a thin film with the desired thickness. Accordingly, for example, when employing tetrafluoroethane and methane as the monomers, it is suitable to use them at a volume ratio (under standard conditions) of from 1:10 to 5:1, while, when employing hexafluoroethane and methane as the monomers, it is suitable to use them at a volume ratio (under standard conditions) of from 3.3:1 to 1:15. When two or more kinds of monomeric compunds are used in combination, they can be introduced into the reactor as a gas mixture or separately into the reactor to be mixed therein.

As will be appreciated from the above, the hydrogen and halogen required to be present in the specified ratio may be provided by free hydrogen and halogen gases (C) and (D) or may be provided by combined hydrogen and/or combined halogen from the halogenated alkane (A) and alkane (B). Where a perhaloalkane is employed as the halogenated alkane (A) it will be necessary to provide hydrogen either from an alkane (B) or the gas (C).

In the process it is required that the electron temperature of the plasma in the reaction zone (more specifically, for example, in the region within from 1 to 3 cm from the surface of the substrate in the direction perpendicular thereto) during plasma polymerization, should be 6,000°K or higher and less than 30,000°K, preferably from 10,000 to 28,000°K. If the electron temperature is less than 6,000°K, a thin film having an uneven surface will be formed. On the other hand, if the electron temperature is 30,000°K or higher, the thin film formed will have a high density and hardness but low toughness.

The electron temperature referred to herein is that measured using a probe for measurement of plasma characteristics as disclosed in Japanese Patent Publication Kokai No. 135 574/1979 and U.S. Patent No. 4,242,188. The electron temperature can be controlled to a desired value by varying the discharge power for excitation of plasma, discharge current, pressure of the gas containing monomers, flow rate of said gas, structure of electrodes, position of substrate, etc.

Other conditions in the process may be substantially the same as those in conventional plasma polymerization. The degree of vacuum during plasma polymerization may be from $1 \times 10^{-3}$ to 1 Torr (0.13—133 pascals), and the flow rate of the gas containing monomers flowing into the reactor may be, for example, from 0.1 to 100 cc (STP)/min. in the case of a reactor having an inner volume of 100 litre. The

above-mentioned gas may be mixed with an inert gas such as argon, helium, xenon or neon, before or after being charged into the reactor. The substrate temperature during plasma polymerization is not particularly limited, but is preferably between 0° and 300°C.

The type of discharge to be used for generation of the plasma is not particularly limited and any of DC discharge, low frequency discharge, high frequency discharge and micro-wave discharge may be used. Also, the reaction device to be used for the plasma polymerization is not particularly limited. Therefore either an internal electrode system or an electrodeless system may be utilized. There is also no limitation on the shape of the electrodes or coil, or on the structure of the cavity or antenna in the case of micro-wave discharge. Any known device for plasma polymerization can be utilized.

According to the process as described above, a novel amorphous poymeric film with a thickness of from 1 nm to 1 µm can be obtained on the substrate, said film essentially consisting of carbon (C), hydrogen (H), halogen (X) and oxygen (O) at an atomic ratio of these elements represented by the following formula:

$$C_{1.0}H_{0.005-0.2}X_{0.005-0.2}O_{0.005-0.3}$$

and having a ratio of the number of hydrogen atoms bonded to carbon atoms having a double bond (=C—H) to the number of hydrogen atoms bonded to carbon atoms having only single bonds (—C—H) of from 0:1 to 0.1:1 and a density of from 1.6 to 3.5 g/cm$^3$. The oxygen in the polymeric thin film obtained is presumed to be due to the reaction of the residual active radicals in the film with oxygen in the atmosphere, when the thin film is taken out from the reactor and brought into contact with the atmosphere.

The ratio of the number of hydrogen atoms bonded to carbon atoms having a double bond to the number of hydrogen atoms bonded to carbon atoms having only single bonds is defined as the ratio of the area of the absorption peak at 3010 to 3040 cm$^{-1}$ (corresponding to =C—H) to that at 2840 to 3000 cm$^{-1}$ (corresponding to —C—H) when the IR-absorption spectrum of the thin film is measured by the Fourier Transform Infrared Spectrum method.

On the other hand, the atomic ratios of halogen to carbon (X/C) and oxygen to carbon (O/C) can be measured by, for example, Electron Spectroscopy for Chemical Analysis (ESCA), and the atomic ratio of hydrogen to carbon (H/C) by means of, for example, elemental analysis.

The above polymeric thin film is unique in that the constituent elements are markedly enriched in carbon content, with the remainder of the elements of hydrogen, halogen and oxygen being present in only small amounts. Moreover, it may be considered that almost all the carbon atoms have only single bonds, so that there is created a three-dimensional structure like diamond. For this reason, this polymeric thin film has a very high density and hardness, and yet it is also high in toughness because it is amorphous.

The process has the advantage of greater polymerization rate, namely growth rate of the polymeric thin film, and its rate is at least three times greater than that of the plasma polymerization of methane only. Also, the above thin film obtained according to this process has the advantage of having both high hardness (Vickers hardness of 1000 or higher) and high toughness. Accordingly, it is useful as a surface protective film or surface reinforcing film for various articles, and can exhibit a high scratch resistance and a long still life time when used as the protective film for magnetic recording media. Further, this thin film has good chemical stability to acids, alkalis and organic solvents similar to that of films prepared by conventional plasma polymerization.

In a preferred embodiment of the process the concentration ratio of hydrogen halide (HX) to hydrogen ($H_2$) in the reaction zone for plasma polymerization is from 0.1:1 to 500:1, preferably from 1:1 to 100:1. According to this embodiment, the uniformity and reproducibility in quality of the polymeric thin film formed can be improved. The concentration ratio of hydrogen halide to hydrogen is defined as the ratio of the peak area corresponding to the m/e ratio of hydrogen halide molecules (e.g. HF: 20, HCl: 36) to the peak area corresponding to m/e of hydrogen molecules (2), when measured by feeding the gas from the reaction zone by differential pumping to a quadrupole mass analyzer. The concentration ratio during polymerization can be controlled within the desired range by varying, for example, the flow rate of the gas containing monomers.

In another preferred embodiment of the process the polymeric thin film prepared as described above is subsequently treated with hydrogen plasma. Such post-treatment with hydrogen plasma enables the atomic ratios of halogen and oxygen to carbon to be positively controlled to within the ranges of from 0.005:1 to 0.05:1 and from 0.005:1 to 0.15:1, respectively. As a result, a polymeric thin film with a Vickers hardness of 2,000 or higher can be obtained, and its transparency can also be enhanced. For example, the transmittance of light of wavelength 350 to 600 nm through a thin film with a thickness of 1 µm can be enhanced from a value before hydrogen plasma treatment of 95% or higher to a value after such treatment of 99% or higher. A thin film having such a high transparency is useful as the surface reinforcing film for lenses, etc.

The hydrogen plasma treatment mentioned above may be carried out under the following conditions: a gas pressure of $1 \times 10^{-3}$ to 100 Torr (0.13—$1.3 \times 10^4$ pascal); an electron temperature of the plasma in the vicinity of the polymeric thin film to be treated (for example, at a distance of from 1 to 3 cm from the thin film) of from $1 \times 10^4$ to $8 \times 10^4$ K; and a temperature of the polymeric thin film of from 0 to 500°C. The flow rate of hydrogen gas to be fed into the reactor may suitably be from 0.1 to 100 cc (STP)/min. in the case of a reactor having a volume of 100 litre. The treatment time, which depends on the desired thickness of the

polymeric thin film to be formed, may generally be from one second to one hour.

The polymeric thin film formed may be exposed once to the atmosphere before hydrogen plasma treatment, or alternatively it may be subjected to hydrogen plasma treatment subsequent to its formation but without exposure to the atmosphere. In the latter case, the treatment is more effective.

The substrate used in the process can be of various materials and can have various shapes depending its intended purpose.

Materials which may be used for the substrate include, for example: metals such as Fe, Co, Ni, Al, Cu, Sn, Ti, V, Cr, Zn, Mn, Zr, Nb, Mo, Rn, Rh, Pd, Ag, In, Sb, Te, Ta, W, Re, Pt, Au, Pb, Bi, U, etc.; metal oxides such as $Fe_2O_3$, $Fe_3O_4$, $Al_2O_3$, $SnO_2$, $Re_2O_3$, $TiO_2$, $Ti_2O_3$, $LiTi_2O_3$, $WO_3$, $V_2O_3$, $VO_2$, etc.; metal nitrides such as $Zn_3N_2$, AlN, TaN, TiN, $Fe_2N$, $Cu_3N$, NbN, VN, etc.; metal carbides such as WC, TaC, TiC, $Fe_3C$, $Cu_2C_2$, NbC, $W_2C$, $Mo_2C$, VC, $Mn_3C$, MoC etc.; alloys such as stainless steel, brasss, bronze, duralmin, high speed steel (HIS), high tension steel (HITEN), Kovar, heat-resistant steel, nitride steel, nickel silver, etc.; semiconductors such as crystalline silicon, amorphous silica, Ge, GaAs, etc.; ceramics such as $SiO_2$, $Si_3N_4$, SiC, diamond, etc.; organic polymeric compounds such as polyethylene, polystyrene, polyethylene terephthalate, polyimide, polymethyl methacrylate, polycarbonate, ABS resin, polypropylene, polyvinyl chloride, polyvinylidene chloride, polytetrafluoroethylene, acetyl cellulose, polyvinylidene fluoride, polytrifluorochloroethylene, polyamide, polyurethane, polyoxymethylene, etc.; inorganic polymeric compounds such as silicones, polystanoxane, polyphosphazen, polyvinyl ferrocene, etc.; glasses and so on. With any of these materials, a thin film having a high adhesion to the substrate can be formed.

If it is desired to obtain the polymeric thin film of the present invention in the free form, it can be formed according to the process of the present invention on a soluble substrate prepared from, for example, sodium chloride, potassium bromide etc., followed by dissolving the substrate.

The material and the shape of the substrate can be selected depending on the purpose of forming the thin film, and the process for preparing the thin film of the present invention can be utilized for the production of various kinds of articles. With some kinds of articles, still another layer can be formed on the polymeric thin film. Accordingly, it is possible to produce various kinds of articles having the polymeric thin film of the present invention as a surface layer or as an intermediate layer. More specifically, on the surface of metallic articles (such as electronic parts, precision machine parts, e.g., rotating shafts, bearings, gears, cylinders, pistons and the like, bolts, nuts, gaskets, sealing members for precision valves, etc) polymeric thin films can be formed for such purposes as providing electrical insulation, rust proofing, scratch proofing, abrasion resistance, etc. It is also possible to utilize the thin film as the protective film for reinforcement of the surface of various plastic products such as plastic lenses, plastic panes, plastic nuts and bolts, plastic sealing members for precision valves and plastic precision machine parts including rotating shafts, bearings, gears, cylinders, pistons etc.

Also, in order to lower the gas permeability of various resin films or to ensure the gas impermeability of various walls, e.g., the wall of a plastic vacuum vessel, the polymeric thin film of the present invention can be formed on the surface thereof. Moreover, the polymeric thin film of the invention can be formed on the surface of individual particles of finely powdered material such as powdered diamond which is, for example, to be mixed with other materials to produce a composite product such as a diamond cutting or grinding tool, in order to improve the affinity of the particles for the other materials and thus improve the performance of the product. In addition to powdered diamond, such finely powdered materials include, for example, finely powdered metals such as iron, nickel and aluminium for use in the production of rubber switches, electromagnetic shielding boards, etc. Also, the thin film of the present invention can be formed as a protective film on the thin magnetic metal film of a magnetic recording medium such as a video tape. If desired, a lubricant layer may also be formed on such a protective film.

Of the various articles that can be provided with the thin film of the present invention, magnetic recording media are of particular interest. This is because the excellent characteristics of the thin film of the present invention can be particularly advantageously exhibited when applied to such media.

Generally speaking, a magnetic recording medium comprises a non-magnetic support and a thin magnetic metal film provided thereon. When the polymeric thin film of the present invention is formed on the thin magnetic metal film, the scratch resistance and the still life time of the magnetic recording medium can be greatly improved. In this case, the thickness of the polymeric thin film should preferably be from 2 nm to 0.1 µm, more preferably from 2 nm to 0.01 µm. If the thickness is less than 2 nm, pinholes may sometimes be formed in the polymeric thin film. On the contrary, a thickness greater than 0.04 µm will unacceptably lower the recording characteristics of the magnetic recording medium.

The non-magnetic support used may have a thickness of from 4 to 50 µm, and may be made of any of various materials including cellulose acetate; nitrocellulose; ethylcellulose; methylcellulose; polyamide; polymethyl methacrylate; polytetrafluoroethylene; polytrifluoroethylene; homopolymers or copolymers of α-olefins such as ethylene or propylene; homopolymers or copolymers of vinyl chloride; polyvinylidene chloride; polycarbonate; polyimide; polyamide-imide; polyesters such as polyethylene terephthalate; and so on.

The thin magnetic metal film of the magnetic recording medium generally has a thickness of from 0.02 to 5 µm and may be formed by vapour deposition methods or plating methods. Vapour deposition methods include the vacuum evaporation method, the sputtering method, the ion plating method, the ion beam deposition method and the chemical vapour deposition method. The plating method may be an

electric plating method or an electroless plating method. Materials usable for the thin magnetic metal film include ferromagnetic metals such as Fe, Co or Ni and alloys thereof, particularly Fe—Si, Fe—Rh, Fe—V, Fe—Ti, Co—P, Co—B, Co—Si, Co—V, Co—Y, Co—Sm, Co—Mn, Co—Ni—P, CO—Ni—B, Co—Cr, Co—Ni—Cr, Co—Ni—Ag, Co—Ni—Pd, Co—Ni—Zn, Co—Cu Co—Ni—Cu, Co—W, Co—Ni—W, Co—Mn—P, Co—Sm—Cu, Co—Ni—Zn—P, Co—V—Cr, etc. Preferably, the magnetic thin film contains 50 wt. % or more of Co.

The polymeric thin film of the invention provided on a thin magnetic metal film as described above can be further coated with a lubricant such as a higher fatty acid, a fatty acid ester, a fatty acid amide, a fluorine compound or a silicon compound. Also, the side of the support opposite to that of the magnetic metal thin film can be further provided with a backcoat layer.

The polymeric thin film provided as a surface layer or an intermediate layer on or in the magnetic recording medium can function very effectively as a protective film to provide the magnetic recording medium with excellent scratch resistance and still life time.

The present invention is described below in more detail with reference to the following Examples.

Example 1

Experiments No. 1 to No. 12 were carried out to form polymeric films by plasma polymerization on a polycarbonate plate measuring 50 × 50 × 5 mm in a bell-jar type reactor as shown in Fig. 1. Experiments No. 7 to 13 are comparative examples. Experiment No. 13 relates to an untreated polycarbonate plate.

In Fig. 1 parallel plate type electrodes, 2, 2′ are provided in a reactor 1, and these electrodes are connected to a power source 3 provided outside the reactor 1. To the bottom of the reactor 1 is connected a pipe 5 for charging a gas containing monomers and provided with a valve 7 for controlling the gas flow rate. At another part of the bottom of the reactor, a gas discharge pipe 4 is connected and provided with a valve 6 for controlling the pressure in the reactor 1. The side wall of the reactor 1 is equipped with a pressure indicator 8 for monitoring the pressure within the reactor 1.

In practicing the process of the present invention, a polycarbonate plate 9 (the substrate) was placed between the two electrodes 2 and 2′. At a distance of 2 cm from the plate 9 there was placed a probe 10 for measuring the electron temperature of the plasma as disclosed in Japanese Patent Publication Kokai No. 135 574/1979 and U.S. Patent No. 4,242,188. In each experiment, an alternating current of 20 KHz was applied between the electrodes 2 and 2′ to generate plasma, and the discharge power, the gas flow rate and the gas pressure were controlled so as to cause the electron temperature of the plasma to reach the desired value.

The plasma polymerization conditions in the respective experiments, namely the monomeric compounds and their flow rates, pressures, discharge currents, electron temperatures and polymerization times are shown in Table 1A.

The thickness (optical thickness), the density, the pencil hardness, the toughness, the atomic ratio of constituent elements, and the ratio of the number of hydrogen atoms bonded to carbon atoms having a double bond (=C—H) to the number of hydrogen atoms bonded to carbon atoms having only single bonds (—C—H) of the polymeric film formed on the polycarbonate plate were measured as follows.

In order to determine the thickness of the polymeric film, a silicon water was placed adjacent to the polycarbonate plate during plasma polymerization and the optical thickness of the polymeric film formed at the same time on the silicon wafer was measured by an ellipsometer; this measured value was assumed to be the thickness of the polymeric film on the polycarbonate plate.

The density of the polymeric thin film was determined by dividing the weight thickness (the thickness when the density is supposed to be 1) of the polymeric thin film by the above optical thickness. The weight thickness was determined from the weight gain of the above silicon wafer caused by deposition of the polymeric film.

The pencil hardness of the polymeric film was measured by a pencil scratch tester according to JIS K 5401 (1969). The toughness of the polymeric film was evaluated as follows. With a load of 100 g applied on the polymeric film, a sapphire ball 1 mm in diameter was placed thereon and the film was scratched with the ball at a speed of 50 cm/min. The scratched surface was observed with an optical microscope (x1000), and the scratch resistance was evaluated according to the four rankings shown below, depending on the number of cracks formed within the field of vision of about 30 µm diameter.

| Rank | Number of cracks |
|---|---|
| A | 0 |
| B | 1— 9 |
| C | 10—99 |
| D | 100 or more |

The atomic ratio of the constituent elements and the ratio of the number of hydrogen atoms bonded to carbon atoms having a double bond to hydrogen atoms bonded to carbon atoms having only single bonds were determined by measuring the IR spectra of the polymeric films on the silicon wafers mentioned above according to the methods described above.

The results of the above experiments are shown in Table 1B.

Table 1A

| Experiment[1] No. | Monomeric compounds | Flow rate cc(STP)/min. | Pressure Torr (Pascal) | Discharge current mA | Electron temperature $x10^4$ K | Polymerization time (min) |
|---|---|---|---|---|---|---|
| 1 | $CH_4$<br>$CF_4$ | 10<br>10 | 0.05<br>(6.7) | 200 | 2.2 | 30 |
| 2 | $C_2H_6$<br>$C_2F_6$ | 7<br>3 | 0.05<br>(6.7) | 350 | 1.6 | 20 |
| 3 | $CH_4$<br>$F_2$ | 10<br>10 | 0.1<br>(13.3) | 150 | 2.7 | 37 |
| 4 | $H_2$<br>$CF_4$ | 20<br>7 | 0.1<br>(13.3) | 150 | 2.4 | 40 |
| 5 | 1,1-difluoroethane | 20 | 0.2<br>(26.7) | 300 | 2.2 | 35 |
| 6 | $C_2H_6$<br>$H_2$<br>$CF_4$ | 5<br>5<br>15 | 0.05<br>(6.7) | 350 | 2.3 | 32 |
| *7 | $CH_4$<br>$CF_4$ | 3<br>3 | 0.02<br>(2.7) | 250 | 3.7 | 40 |
| *8 | $C_2H_6$<br>$C_2F_6$ | 10<br>5 | 0.2<br>(26.7) | 200 | 0.5 | 26 |

Table 1A (cont'd)

| Experiment No.[1] | Monomeric compounds | Flow rate cc(STP)/min. | Pressure Torr (pascal) | Discharge current mA | Electron temperature x$10^4$ K | Polymerization time (min) |
|---|---|---|---|---|---|---|
| *9 | $CH_4$<br>$F_2$ | 10<br>6 | 0.1<br>(13.3) | 200 | 6.5 | 42 |
| *10 | $H_2$<br>$CF_4$ | 10<br>3 | 0.5<br>(66.7) | 70 | 0.4 | 200 |
| *11 | $CH_4$ | 50 | 0.05<br>(6.7) | 200 | 6.7 | 130 |
| *12 | $CH_4$<br>$CF_4$ | 4<br>25 | 0.1<br>(13.3) | 200 | 5.3 | 200 |
| *13[2] | - | - | - | - | - | - |

Note: (1) Symbol(*) indicates comparative examples.

(2) An untreated polycarbonate plate was tested in Experiment No. 13.

Table 1B

| Experiment No. | Thickness nm | Pencil hardness | Toughness | Density g/cm3 | Atomic ratio of constituent elements C | H | F | O | Ratio of two[(1)] kinds of hydrogen atoms |
|---|---|---|---|---|---|---|---|---|---|
| 1 | 320 | 4H | A | 2.4 | 1 | 0.07 | 0.06 | 0.12 | 0.06 |
| 2 | 350 | 3H | A | 1.9 | 1 | 0.15 | 0.11 | 0.13 | 0.10 |
| 3 | 300 | ~2H | B | 1.7 | 1 | 0.14 | 0.06 | 0.11 | 0.07 |
| 4 | 310 | 2H | B | 1.8 | 1 | 0.03 | 0.12 | 0.10 | 0.06 |
| 5 | 380 | 2H | A | 1.7 | 1 | 0.12 | 0.11 | 0.09 | 0.09 |
| 6 | 320 | 3H | A | 1.9 | 1 | 0.10 | 0.07 | 0.09 | 0.08 |
| *7 | 300 | 3H | D | 2.0 | 1 | 0.06 | 0.06 | 0.33 | 0.08 |
| *8 | 320 | B | C | 1.5 | 1 | 0.16 | 0.22 | 0.16 | 0.15 |
| *9 | 310 | 2H | D | 1.7 | 1 | 0.16 | 0.06 | 0.31 | 0.06 |
| *10 | 120 | 2B | C | 1.9 | 1 | 0.07 | 0.25 | 0.35 | (2) |
| *11 | 310 | 2H | D | 1.8 | 1 | 0.16 | 0 | 0.40 | 0.08 |
| *12 | 100 | B | C | 1.9 | 1 | 0.16 | 0.27 | 0.32 | (2) |
| *13 | - | <6B | B | - | - | - | - | - | - |

Note: (1) Ratio in number of the hydrogen atoms bonded to carbon atoms having a double bond to the hydrogen atoms bonded to carbon atoms having only single bonds.

(2) The measurement was impossible.

Example 2

In Experiments No. 14 to No. 25 polymeric thin films were formed on iron discs under the same conditions as in Experiments No. 1 to 12 in Example 1, except that iron discs of diameter 60 mm and thickness 2 mm were used in place of the polycarbonate plates. Experiments No. 20 to No. 26 are comparative examples. Experiment No. 26 relates to an untreated iron disc.

Vickers hardness, dynamic frictional coefficient when rubbed with an iron bar, amount of abrasion and corrosion resistance of the polymeric thin film obtained in each experiment were measured.

The dynamic frictional coefficient was determined by urging the flat end of an iron rod 5 mm in diameter with a load of 200 g against the iron disc at a distance of 30 mm from its center, then rotating the iron disc at 200 rpm and measuring the force applied on the iron rod in the transverse direction. The amount of abrasion was determined by measuring, with a precision balance, the weight of the abraded powder when the iron disc was rotated as described above for one hour.

The corrosion resistance of the polymeric film was evaluated according to the standards shown below by spraying the iron disc with a 3.5% aqueous sodium chloride solution for 3 hours and thereafter observing the surface state:

A: no change

B: slightly brownish

C: locally deep brownish

D: wholly deep brownish

The results of the above tests are shown in Table 2.

Table 2

| (1) (2) Experiment No. | Vickers hardness | Dynamic frictional coefficient | Abrasion amount (mg) | Corrosion resistance |
|---|---|---|---|---|
| 14 | 2200 | 0.27 | ≦0.1 | A |
| 15 | 1200 | 0.24 | ≦0.1 | A |
| 16 | 1800 | 0.29 | ≦0.1 | B |
| 17 | 1700 | 0.28 | 0.15 | B |
| 18 | 1200 | 0.37 | 0.2 | A |
| 19 | 2300 | 0.25 | ≦0.1 | A |
| *20 | 2100 | 0.35 | 0.9 | D |
| *21 | 400 | 0.45 | 1.5 | B |
| *22 | 1300 | 0.30 | 1.1 | D |
| *23 | 200 | 0.32 | 1.0 | D |
| *24 | 1400 | 0.29 | 1.2 | D |
| *25 | 300 | 0.30 | 0.9 | D |
| *26 (3) | 600 | 0.65 | 4 | |

Note: (1) Polymerization conditions including monomeric compounds were the same as in Experiment No. 1 to No. 12.

(2) Symbol (*) indicates comparative examples.

(3) An untreated iron disc was tested in Experiment No. 26.

Example 3

Polymeric thin films were formed on polycarbonate plates in the same way as in Experiments No. 1 to No. 6 in Example 1, and were then treated with a hydrogen plasma as described below.

In Experiments No. 27 to No. 32, after preparation of the polymeric thin films in the same way as in Experiments No. 1 to No. 6, the gas for plasma polymerization in the reactor was replaced by hydrogen gas withut exposuring the films to the atmosphere, and the films were treated with hydrogen plasma under a pressure of 0.2 Torr (26.7 pascals), a hydrogen gas flow rate of 20 cc (STP)/min., a discharge frequency of 20 KHz, a discharge current of 300 mA and an electron temperature of $5.5 \times 10^4$ K for 30 minutes.

In Experiments No. 33 to No. 38, polymeric thin films were prepared in the same way as in Experiments No. 1 to No. 6, then left to stand in the atmosphere at 23°C and a relative humidity of 60% for 24 hours, and finally treated with hydrogen plasma under the same conditions as employed for Experiments No. 27 to 32.

After hydrogen plasma treatment, the pencil hardness, toughness, density, atomic ratio of constituent elements and atomic ratio of hydrogen atoms bonded to carbon atoms having a double bond and hydrogen atoms bonded to carbon atoms having only single bonds were measured as described in Example 1. The Vickers hardness of the polymeric thin film and the transmittance of visible light were also

measured. Transmittance of visible light was determined for light with wavelengths ranging from 350 to 600 nm through a polymeric thin film as calculated for a thickness of 1 μm.

These results are shown in Table 3.

Table 3

| Experiment No. | Pencil hardness | Toughness | Vickers hardness | Transmittance of visible light %[1] | Density g/cm³ | Atomic ratio of constituent elements | | | | Ratio of two kinds of hydrogen atoms[2] |
|---|---|---|---|---|---|---|---|---|---|---|
| | | | | | | C | H | F | O | |
| 27 | 5H | A | 3000 | >99 | 2.5 | 1.0 | 0.09 | 0.02 | 0.04 | 0.04 |
| 28 | 4H | A | 2100 | >99 | 2.0 | 1.0 | 0.15 | 0.03 | 0.06 | 0.07 |
| 29 | 4H | A | 2200 | >99 | 1.7 | 1.0 | 0.16 | 0.02 | 0.06 | 0.06 |
| 30 | 4H | A | 2100 | >99 | 1.8 | 1.0 | 0.05 | 0.02 | 0.05 | 0.05 |
| 31 | 4H | A | 2200 | >99 | 1.8 | 1.0 | 0.15 | 0.04 | 0.04 | 0.07 |
| 32 | 4H | A | 2400 | >99 | 2.0 | 1.0 | 0.13 | 0.02 | 0.05 | 0.06 |
| 33 | 4H | A | 2500 | 97 | 2.0 | 1.0 | 0.07 | 0.04 | 0.05 | 0.05 |
| 34 | 3H | A | 2100 | 97 | 1.5 | 1.0 | 0.16 | 0.04 | 0.07 | 0.09 |
| 35 | 3H | A | 2100 | 96 | 1.8 | 1.0 | 0.16 | 0.04 | 0.09 | 0.06 |
| 36 | 3H | A | 2000 | 97 | 1.9 | 1.0 | 0.06 | 0.03 | 0.07 | 0.05 |
| 37 | 3H | A | 2200 | >99 | 1.8 | 1.0 | 0.15 | 0.04 | 0.07 | 0.08 |
| 38 | 4H | A | 2300 | >99 | 1.9 | 1.0 | 0.14 | 0.03 | 0.06 | 0.06 |

Note: (1) Wave length: 350 to 600 nm; the values indicated were calculated for a thickness of 1 μm.

(2) Ratio in number of the hydrogen atoms bonded to carbon atoms having a double bond to the hydrogen atoms bonded to carbon atoms having single bonds only.

Example 4

Polymeric thin films were formed as protective films for magnetic recording media, using the device shown in Fig. 2.

In Fig. 2, a reactor 22, connected to a vacuum pump 21, is provided with a pair of parallel plane electrodes 23, 24 opposed to each other, and these are connected to an AC power supply 25 (20 KHz). At one corner of the reactor 22, there are provided pipes 26, 27 and 28 for feeding gaseous monomeric compounds into the reactor 22. These monomer feeding pipes are provided with flow rate control valves (not shown). On a side wall of the reactor 22, there is provided a pressure indicator (not shown) for monitoring the pressure within the vessel. A base material tape 31 for a magnetic recording medium to be treated is fed from a first roll 29 during operation so as to run continuously between the two electrodes 23 and 24 and be wound up on a second roll 30. In the region between the electrodes 23 and 24, at a distance of 2 cm from the tape to be treated, there is provided a probe 32 for measuring the electron temperature as mentioned in Example 1. The reactor is also equipped with a tube 33 for sampling the gas in the reaction zone during plasma polymerization. The tube 33 is connected to a mass spectrum analyzer (not shown).

In carrying out the operation using the device shown in Fig. 2, one or more kinds of monomeric compounds are fed into the reactor 22 as the reactor 22 is evacuated by the vacuum pump 21. The pressure and the flow rates of the monomeric compounds are controlled to the desired values. When a plasma is excited by an electrical discharge between the electrodes 23 and 24, a polymeric thin film is formed by plasma polymerization on the surface of the base material tape running between the electrodes. The electron temperature in the reaction zone is measured by the probe 32 and controlled to the desired value by varying the discharge current, the pressure in the reactor, the flow rates of monomeric compounds, etc.

In Experiments No. 39 to No. 54 (Experiments No. 49 to No. 54 are comparative examples), a continuous polyethylene terephthalate film with a thickness of 12 µm and a width of 10 cm coated on its surface by oblique evaporation with a thin Co-Ni magnetic film (thickness 100 nm) was used as the base material tape, and polymeric thin films were formed on this thin magnetic metal film by means of the device shown in Fig. 2 to obtain magnetic recording media.

The plasma polymerization conditions, namely the monomeric compounds and their flow rates, pressure, discharge current and electron temperature for each experiment are shown in Table 4A.

For each of the thin polymeric films thus formed, the density, the atomic ratio of constituent elements, the ratio of numbers of hydrogen atoms bonded to carbon atoms having a double bond (=C—H) to hydrogen atoms bonded to carbon atoms having only single bonds (—C—H) were measured as in Example 1. The thickness of the polymeric film was measured by an ellipsometer after the film had been deposited for a certain period of time; the deposition rate was determined from this. The running speed of the base material tape was determined on the basis of this deposition rate for effecting control as shown in Table 5.

Further, the scratch resistance, still life and weather resistance of the magnetic recording media thus obtained were evaluated as follows.

For evaluation of scratch resistance, each magnetic recording medium was cut into a tape 12.65 mm (0.5 inch) wide. A 50 m length of this tape was loaded in a VHS type VTR (trade name: NV 8200, produced by Matsushita Electric Industrial Co., Ltd.), and running was repeated 500 times. The scratches formed after this running were observed, and the scratch resistance was evaluated according to the following standards:

1: 10 or more deep scratches per 12.65 mm
2: 5 to 9 deep scratches per 12.65 mm
3: 1 to 4 deep scratches per 12.65 mm
4: 5 or more shallow scratches per 12.65 mm
5: 4 or less shallow scratches per 12.65 mm.

Here, a deep scratch refers to a scratch which can easily be observed with a 5 × loupe, while a shallow scratch refers to one which can be observed only by use of an optical microscope at 100 magnifications.

The weather resistance was evaluated according to the following standards, observing the discoloration after leaving a strip of the magnetic recording medium in the atmosphere at a temperature of 60°C and a relative humidity of 90% for 7 days.

1: discolored over all the surface
2: discolored at 80 to 90% of the surface
3: discolored at 40 to 79% of the surface
4: discolored at 1 to 39% of the surface
5: not discolored at all.

The results of these measurements and evaluations are listed in Table 4B.

Table 4A

| Experiment No. | Monomeric compounds | Flow rate cc(STP)/min. | Pressure mTorr (pascals) | Discharge current mA | Electron temp. x$10^4$ K |
|---|---|---|---|---|---|
| 39 | $CH_4$<br>$CF_4$ | 10<br>10 | 50<br>(6.7) | 200 | 2.2 |
| 40 | $C_4H_{10}$<br>$C_3H_8$ | 10<br>12 | 50<br>(6.7) | 200 | 1.0 |
| 41 | $CH_4$<br>$F_2$ | 10<br>10 | 100<br>(13.3) | 150 | 2.7 |
| 42 | $CF_4$<br>$H_2$ | 7<br>20 | 100<br>(13.3) | 150 | 2.4 |
| 43 | $CH_4$<br>$C\ell_2$ | 10<br>10 | 50<br>(6.7) | 150 | 2.0 |
| 44 | 1,1-difluoroethane | 20 | 200<br>(26.7) | 360 | 2.9 |
| 45 | $C_3H_8$<br>$C_3F_8$ | 10<br>10 | 50<br>(6.7) | 250 | 1.3 |
| 46 | $C_2F_6$<br>$H_2$ | 7<br>10 | 50<br>(6.7) | 180 | 0.7 |
| 47 | $C_2H_6$<br>$F_2$ | 10<br>10 | 100<br>(13.3) | 310 | 2.5 |
| 48 | $C_2H_6$<br>$H_2$<br>$CH_4$ | 5<br>5<br>15 | 50<br>(6.7) | 350 | 2.3 |
| *49 | $CH_4$<br>$F_2$ | 10<br>6 | 100<br>(13.3) | 200 | 6.5 |
| *50 | $CF_4$ | 15 | 50<br>(6.7) | 330 | 2.9 |
| *51 | $CH_4$<br>$CF_4$ | 3<br>3 | 20<br>(2.7) | 250 | 3.7 |

Table 4A (cont'd)

| Experiment No.(1) | Monomeric compounds | Flow rate cc(STP)/min. | Pressure mTorr (pascals) | Discharging current mA | Electron temp. x10$^4$ K |
|---|---|---|---|---|---|
| *52 | $C_2H_6$<br>$C_2F_6$ | 10<br>5 | 200<br>(26.7) | 200 | 0.5 |
| *53 | $CH_4$ | 50 | 50<br>(6.7) | 200 | 6.7 |
| *54(2) | - | - | - | - | - |

Note: (1) Symbol (*) indicates comparative examples.

(2) An untreated base material film was tested in Experiment No. 54.

Table 4B

| Experiment No. | Thickness nm | Density $g/cm^3$ | Atomic ratio of constituent elements C | H | X | O | Ratio of two kinds of hydrogen atoms | Scratch resistance | Still life time min. | Weather resistance |
|---|---|---|---|---|---|---|---|---|---|---|
| 39 | 12 | 2.4 | 1.0 | 0.07 | 0.06 | 0.12 | 0.06 | 5 | ∿40 | 5 |
| 40 | 10 | 1.7 | 1.0 | 0.10 | 0.08 | 0.11 | 0.08 | 5 | ∿40 | 5 |
| 41 | 10 | 1.7 | 1.0 | 0.14 | 0.06 | 0.11 | 0.07 | 5 | ∿30 | 5 |
| 42 | 10 | 1.8 | 1.0 | 0.03 | 0.12 | 0.10 | 0.06 | 5 | ∿30 | 5 |
| 43 | 11 | 1.8 | 1.0 | 0.10 | 0.07 | 0.11 | 0.08 | 5 | ∿30 | 5 |
| 44 | 15 | 1.7 | 1.0 | 0.12 | 0.11 | 0.09 | 0.09 | 4 | ∿30 | 4 |
| 45 | 10 | 1.7 | 1.0 | 0.07 | 0.12 | 0.10 | 0.08 | 5 | ∿40 | 5 |
| 46 | 10 | 1.8 | 1.0 | 0.09 | 0.12 | 0.11 | 0.08 | 4 | ∿40 | 4 |
| 47 | 11 | 1.8 | 1.0 | 0.08 | 0.12 | 0.09 | 0.07 | 5 | ∿30 | 5 |
| 48 | 12 | 1.9 | 1.0 | 0.10 | 0.07 | 0.09 | 0.08 | 5 | ∿30 | 5 |
| *49 | 10 | 1.9 | 1.0 | 0.16 | 0.06 | 0.31 | 0.06 | 2 | ∿10 | 4 |
| *50(3) | - | - | - | - | - | - | - | 3 | ∿ 5 | 2 |
| *51 | 10 | 1.9 | 1.0 | 0.06 | 0.06 | 0.33 | 0.08 | 3 | ∿10 | 2 |
| *52 | 10 | 1.6 | 1.0 | 0.16 | 0.22 | 0.16 | 0.15 | 4 | ∿10 | 3 |
| *53 | 10 | 1.8 | 1.0 | 0.16 | 0.03 | 0.40 | 0.08 | 3 | ∿ 5 | 3 |
| *54 | - | - | - | - | - | - | - | 3 | ∿ 5 | 2 |

Note: (3) No polymeric film was formed in Experiment No. 50.

Example 5

Polymeric thin films were formed on base material tapes as described in Experiments No. 39 to No. 48 in Example 4, and then treated with hydrogen plasma as described below.

In Experiments No. 55 to 64, polymeric thin films were prepared as in Experiments No. 39 to 48, the gas for plasma polymerization in the reactor was replaced by hydrogen gas without exposure of the films to the atmosphere, and the films were treated with hydrogen plasma at a pressure of 0.2 Torr (26.7 pascals), a hydrogen gas flow rate of 20 cc (STP)/min., a discharge frequency of 20 KHz, a discharge current of 300 mA and an electron temperature of $5.5 \times 10^4$ K for one minute.

In Experiments No. 65 to No. 74, polymeric thin films were prepared as in Experiments No. 39 to No. 48, left to stand in the atmosphere at 23°C and a relative humidity of 60% for 24 hours, and then treated with hydrogen plasma under the same conditions as in Experiments No. 55 to 64.

After the hydrogen plasma treatment, the atomic ratio of constituent atoms and the atomic ratio of hydrogen atoms bonded to carbon atoms having a double bond to hydrogen atoms bonded to carbon atoms having only single bonds were measured as in Example 4. Further, the scratch resistance, the still life time and the weather resistance of the magnetic recording media after the hydrogen plasma treatment were evaluated as in Example 4.

The results of the above measurements and evaluations are shown in Table 5.

Table 5

| Experiment No. | Atomic ratio of constituent elements | | | | Ratio of two kinds of hydrogen atoms [1] | Scratch resistance | Still life time min. | Weather resistance |
|---|---|---|---|---|---|---|---|---|
| | C | H | X | O | | | | |
| 55 | 1.0 | 0.09 | 0.02 | 0.04 | 0.04 | 5 | ∿60 | 5 |
| 56 | 1.0 | 0.11 | 0.05 | 0.10 | 0.06 | 5 | ∿50 | 5 |
| 57 | 1.0 | 0.16 | 0.02 | 0.06 | 0.06 | 5 | ∿60 | 5 |
| 58 | 1.0 | 0.02 | 0.05 | 0.02 | 0.05 | 5 | ∿50 | 5 |
| 59 | 1.0 | 0.11 | 0.05 | 0.09 | 0.07 | 5 | ∿50 | 5 |
| 60 | 1.0 | 0.15 | 0.04 | 0.04 | 0.07 | 5 | ∿50 | 5 |
| 61 | 1.0 | 0.08 | 0.05 | 0.06 | 0.07 | 5 | ∿60 | 5 |
| 62 | 1.0 | 0.10 | 0.05 | 0.06 | 0.06 | 5 | ∿60 | 5 |
| 63 | 1.0 | 0.09 | 0.04 | 0.08 | 0.05 | 5 | ∿50 | 5 |
| 64 | 1.0 | 0.13 | 0.02 | 0.05 | 0.06 | 5 | ∿50 | 5 |
| 65 | 1.0 | 0.07 | 0.04 | 0.05 | 0.05 | 5 | ∿50 | 5 |
| 66 | 1.0 | 0.10 | 0.05 | 0.10 | 0.07 | 5 | ∿40 | 5 |
| 67 | 1.0 | 0.16 | 0.04 | 0.09 | 0.06 | 5 | ∿40 | 5 |
| 68 | 1.0 | 0.06 | 0.03 | 0.07 | 0.05 | 5 | ∿30 | 5 |
| 69 | 1.0 | 0.10 | 0.05 | 0.09 | 0.07 | 5 | ∿40 | 5 |
| 70 | 1.0 | 0.15 | 0.04 | 0.07 | 0.08 | 5 | ∿45 | 5 |
| 71 | 1.0 | 0.08 | 0.05 | 0.08 | 0.07 | 5 | ∿50 | 5 |
| 72 | 1.0 | 0.10 | 0.05 | 0.08 | 0.06 | 5 | ∿40 | 5 |

Table 5 (cont'd)

| Experiment No. | Atomic ratio of constituent elements | | | | Ratio of two kinds of hydrogen atoms[1] | Scratch resistance | Still life time min. | Weather resistance |
|---|---|---|---|---|---|---|---|---|
| | C | H | X | O | | | | |
| 73 | 1.0 | 0.09 | 0.05 | 0.09 | 0.05 | 5 | ∿35 | 5 |
| 74 | 1.0 | 0.14 | 0.03 | 0.06 | 0.06 | 5 | ∿40 | 5 |

Note: (1) Ratio in number of the hydrogen atoms bonded to carbon atoms having a double bond to the hydrogen atoms bonded to carbon atoms having single bonds only.

Example 6

In Experiment No. 75, using the device shown in Fig. 2, a polymeric thin film was formed as described below on the same continuous polyethylene terephthalate film having a thin magnetic metal film as used in Example 4. Methane and tetrafluoromethane were employed as the monomeric compounds. During plasma polymerization, while the pressure in the reactor was maintained at 0.05 Torr (6.7 pascals), the discharge current was continuously controlled so that the electron temperature of the plasma in the reaction zone became $2.2 \times 10^4$ K, and the base material film was permitted to run at a speed of 1 m/min. During the reaction, the gas sampled through the sampling tube 33 shown in Fig. 2 from the reaction zone was subjected to mass analysis by means of a quadrupole mass analyzer for determination of the concentration ratio of hydrogen fluoride (HF) to hydrogen ($H_2$) in the gas. While the flow rate ratio of methane to tetrafluoromethane fed into the reactor was maintained at 1:1, the concentration ratio of HF to $H_2$ was controlled to within the range of from 15:1 to 25:1 by continuously varying the total flow rate within the range of from 5 to 30 cc (STP)/min. Thus, preparation of a magnetic recording medium was continued for 24 hours. The results of the $HF/H_2$ concentration ratio in the reaction zone during this operation are shown in Fig. 3.

The magnetic recording medium as prepared above was cut at intervals of 120 m to obtain Samples No. 1 to 12 in the order as prepared from the end at which preparation was initiated. Ten portions were cut from different regions of each sample and evaluated for scratch resistance, still life time and weather resistance as described in Example 4. The evaluation of each sample was based on the average for the ten portions. The evaluation results for Samples No. 1 to 12 are listed in Table 6.

In Experiment No. 76, the magnetic recording medium was prepared in the same manner as in Experiment No. 75 except that the total flow rate of methane and tetrafluoromethane was maintained at 20 cc (STP)/min. and the concentration ratio of $HF/H_2$ was not particularly controlled. The results of monitoring the $HF/H_2$ concentration ratio in the same manner as in Experiment No. 75 are also shown in Fig. 3. The magnetic recording medium obtained was cut as described above to obtain Samples No. 1′ to No. 12′ in the order as prepared. These samples were evaluated as in Experiment No. 75 to obtain the results which are also shown in Table 6.

From Table 6, it can be seen that the product of Experiment No. 75 is superior in its uniformity and reproducibility of performance to the product of No. 76.

Table 6

| Experiment No. 75 | | | | Experiment No. 76 | | | |
|---|---|---|---|---|---|---|---|
| Sample No. | Scratch resistance | Still life time min. | Weather resistance | Sample No. | Scratch resistance | Still life time min. | Weather resistance |
| 1 | 4.9 | >30 | 4.9 | 1' | 4.5 | 30 | 4.8 |
| 2 | 5.0 | >30 | 5.0 | 2' | 4.7 | >30 | 4.9 |
| 3 | 5.0 | >30 | 5.0 | 3' | 5.0 | >30 | 5.0 |
| 4 | 5.0 | >30 | 5.0 | 4' | 5.0 | >30 | 5.0 |
| 5 | 5.0 | >30 | 5.0 | 5' | 5.0 | >30 | 5.0 |
| 6 | 5.0 | >30 | 5.0 | 6' | 5.0 | >30 | 5.0 |
| 7 | 5.0 | >30 | 5.0 | 7' | 4.9 | 30 | 5.0 |
| 8 | 5.0 | >30 | 5.0 | 8' | 4.8 | 30 | 5.0 |
| 9 | 5.0 | >30 | 4.9 | 9' | 4.7 | 30 | 4.8 |
| 10 | 5.0 | >30 | 4.9 | 10' | 4.7 | >30 | 4.7 |
| 11 | 4.9 | >30 | 5.0 | 11' | 4.8 | >30 | 4.7 |
| 12 | 5.0 | >30 | 5.0 | 12' | 4.7 | 30 | 4.7 |

Example 7

In Experiments No. 77 to No. 86, a lubricant layer of stearic acid was applied in an amount of 10 $mg/m^2$ to each of the polymeric thin films of the respective magnetic recording media prepared in the same way as in Experiments No. 39 to No. 48. The still life of each of the products obtained was measured as in Example 4. The results are shown in Table 7.

Table 7

| Experiment No. | Still life time min. |
|---|---|
| 77 | ~60 |
| 78 | ~50 |
| 79 | ~50 |
| 80 | ~40 |
| 81 | ~50 |
| 82 | ~50 |
| 83 | ~60 |
| 84 | ~50 |
| 85 | ~50 |
| 86 | ~60 |

Example 8

In Experiments No. 87 to No. 96, a lubricant layer of stearic acid was applied in an amount of 10 $mg/m^2$ to each of the polymeric thin film surfaces of magnetic recording media prepared in the same way as in Experiments No. 55 to No. 64 of Example 5 in which the polymeric thin films were treated with hydrogen plasma without exposure to the atmosphere. The still life of each product obtained was measured to obtain the results shown in Table 8.

Table 8

| Experiment No. | Still life time min. |
|---|---|
| 87 | >60 |
| 88 | >60 |
| 89 | ~60 |
| 90 | ~60 |
| 91 | ~60 |
| 92 | ~60 |
| 93 | >60 |
| 94 | >60 |
| 95 | ~60 |
| 96 | >60 |

**Claims**

1. An amorphous polymeric thin film formed on a substrate, and consisting essentially of carbon (C), hydrogen (H), halogen (X) and oxygen (O) at an atomic ratio of these elements represented by the following formula:

$$C_{1.0}H_{0.005-0.2}X_{0.005-0.2}O_{0.005-0.3}$$

and having a ratio of the number of hydrogen atoms bonded to carbon atoms having a double bond (=C—H) to the number of hydrogen atoms bonded to carbon atoms having only single bonds (—C—H) of from 0:1 to 0.1:1 and having a density of from 1.6 to 3.5 g/cm$^3$.

2. An amorphous polymeric thin film according to Claim 1, wherein the atomic ratio of halogen (X) to carbon (C) is from 0.005:1 to 0.05:1 and that of oxygen (O) to carbon (C) is from 0.005:1 to 0.15:1.

3. An amorphous polymeric thin film according to Claim 1 or 2, wherein the substrate is a base material for a magnetic recording medium comprising a non-magnetic support and a thin magnetic metal film provided thereon, the amorphous polymeric thin film being formed on said thin magnetic metal film.

4. An amorphous polymeric thin film according to Claim 3 in which a lubricant layer is formed on the polymeric thin film.

5. An amorphous polymeric thin film according to Claim 1 or 2, wherein the substrate is a metallic article.

6. An amorphous polymeric thin film according to Claim 1 or 2, wherein the substrate is a plastic article.

7. An amorphous polymeric thin film according to Claim 1 or 2, wherein the substrate is a finely powdered metal.

8. An amorphous polymeric thin film according to Claim 1 or 2, wherein the substrate is finely powdered diamond.

**Patentansprüche**

1. Ein auf einem Substrat ausgebildeter, amorpher, dünner Polymerisatfilm und bestehend im wesentlichen aus Kohlenstoff (C), Wasserstoff (H), Halogen (X) und Sauerstoff (O) in einem Atomverhältnis dieser Elemente, das durch die folgende Formel dargestellt wird:

$$C_{1,0}H_{0,005-0,2}X_{0,005-0,2}O_{0,005-0,3}$$

und mit einem Verhältnis der Anzahl der Wasserstoffatome, die an Kohlenstoffatome mit einer Doppelbindung (=C—H) gebunden sind, zur Anzahl der Wasserstoffatome, die an Kohlenstoffatome mit lediglich Einfachbindungen (—C—H) gebunden sind von 0:1 bis 0,1:1 und mit einer Dichte von 1,6 bis 3,5 g/cm$^3$.

2. Ein amorpher, dünner Polymerisatfilm nach Anspruch 1, bei dem das Atomverhältnis von Halogen

(X) zu Kohlenstoff (C) von 0,005:1 bis 0,05:1 und dasjenige von Sauerstoff (O) zu Kohlenstoff (C) von 0,005:1 bis 0,15:1 beträgt.

3. Ein amorpher, dünner Polymerisatfilm nach Anspruch 1 oder 2, bei dem das Substrat ein Grundmaterial für ein magnetisches Aufzeichnungsmedium ist, welches einen nichtmagnetischen Träger und einen darauf vorgesehenen dünnen, magnetischen Metallfilm umfasst, wobei der amorphe, dünne Polymerisatfilm auf dem dünnen, magnetischen Metallfilm ausgebildet ist.

4. Ein amorpher, dünner Polymerisatfilm nach Anspruch 3, bei dem auf dem dünnen Polymerisatfilm eine Schmiermittelschicht ausgebildet ist.

5. Ein amorpher, dünner Polymerisatfilm nach Anspruch 1 oder 2, bei dem das Substrat ein metallischer Gegenstand ist.

6. Ein amorpher, dünner Polymerisatfilm nach Anspruch 1 oder 2, bei dem das Substrat ein Kunststoffgegenstand ist.

7. Ein amorpher, dünner Polymerisatfilm nach Anspruch 1 oder 2, bei dem das Substrat ein fein gepulvertes Metall ist.

8. Ein amorpher, dünner Polymerisatfilm nach Anspruch 1 oder 2, bei dem das Substrat fein gepulverter Diamant ist.

**Revendications**

1. Pellicule mince de polymère amorphe formée sur un substrat, et consistânt essentiellement en carbone (C), hydrogène (H), halogène (X) et oxygène (O) avec un rapport atomique de ces éléments représenté par la formule suivante:

$$C_{1,0}H_{0,005-0,2}X_{0,005-0,2}O_{0,005-0,3}$$

et ayant un rapport du nombre d'atomes d'hydrogène liés à des atomes de carbone engagés dans une double liaison (=C—H) au nombre d'atomes d'hydrogène liés à des atomes de carbone engagés seulement dans une liaison simple (—C—H) de 0:1 à 0,1:1 et possédant une masse volumique de 1,6 à 3,5 g/cm$^3$.

2. Pellicule mince de polymère amorphe selon la revendication 1, dans laquelle le rapport atomique de l'halogène (X) au carbone (C) est de 0,005:1 à 0,05:1 et celui de l'hoxygène (O) au carbone (C) est de 0,005:1 à 0,15:1.

3. Pellicule mince de polymère amorphe selon la revendication 1 ou 2, dans laquelle le substrat est un matériau de base pour un milieu d'enregistrement magnétique comprenant un support non magnétique et une pellicule mince d'un métal magnétique prévu sur ce support, la pellicule mince de polymère amorphe étant formée sur cette pellicule mince de métal magnétique.

4. Pellicule mince de polymère amorphe selon la revendication 3; dans laquelle une couche lubrifiante est formée sur la pellicule mince de polymère.

5. Pellicule mince de polymère amorphe selon la revendication 1 ou 2, dans laquelle le substrat est un article métallique.

6. Pellicule mince de polymère amorphe selon la revendication 1 ou 2, dans laquelle le substrat est un article en matière plastique.

7. Pellicule mince de polymère amorphe selon la revendication 1 ou 2, dans laquelle le substrat est un métal sous forme de poudre fine.

8. Pellicule mince de polymère amorphe selon la revendication 1 ou 2, dans laquelle le substrat est un diamant sous forme de poudre fine.

FIG. 1

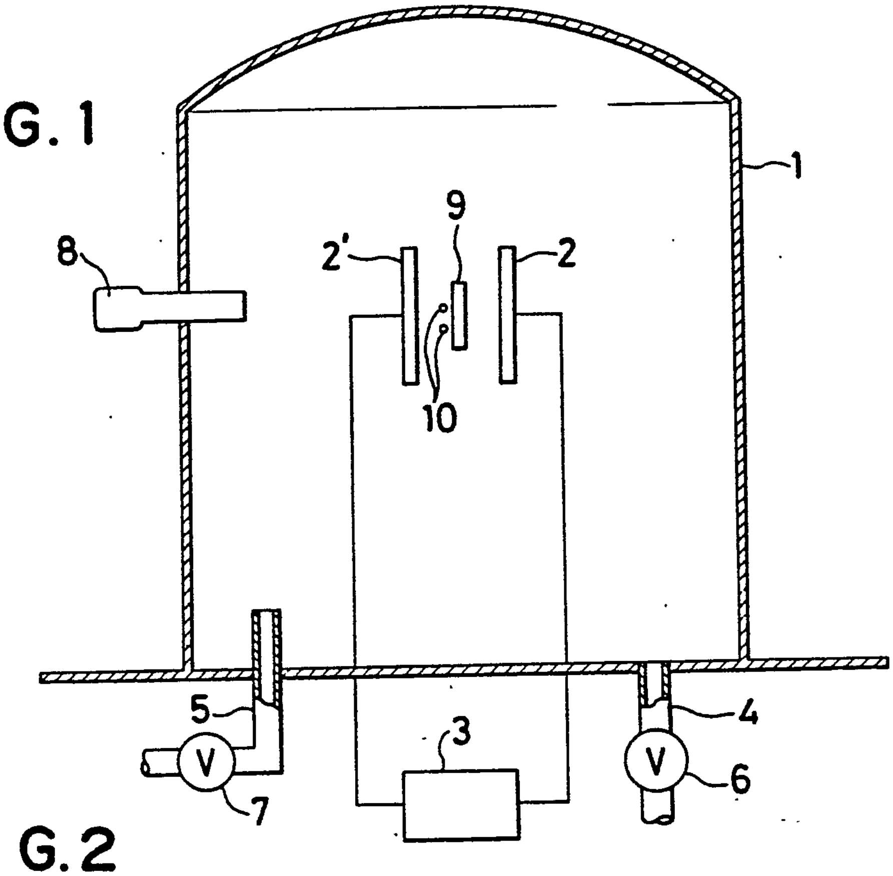


FIG. 2

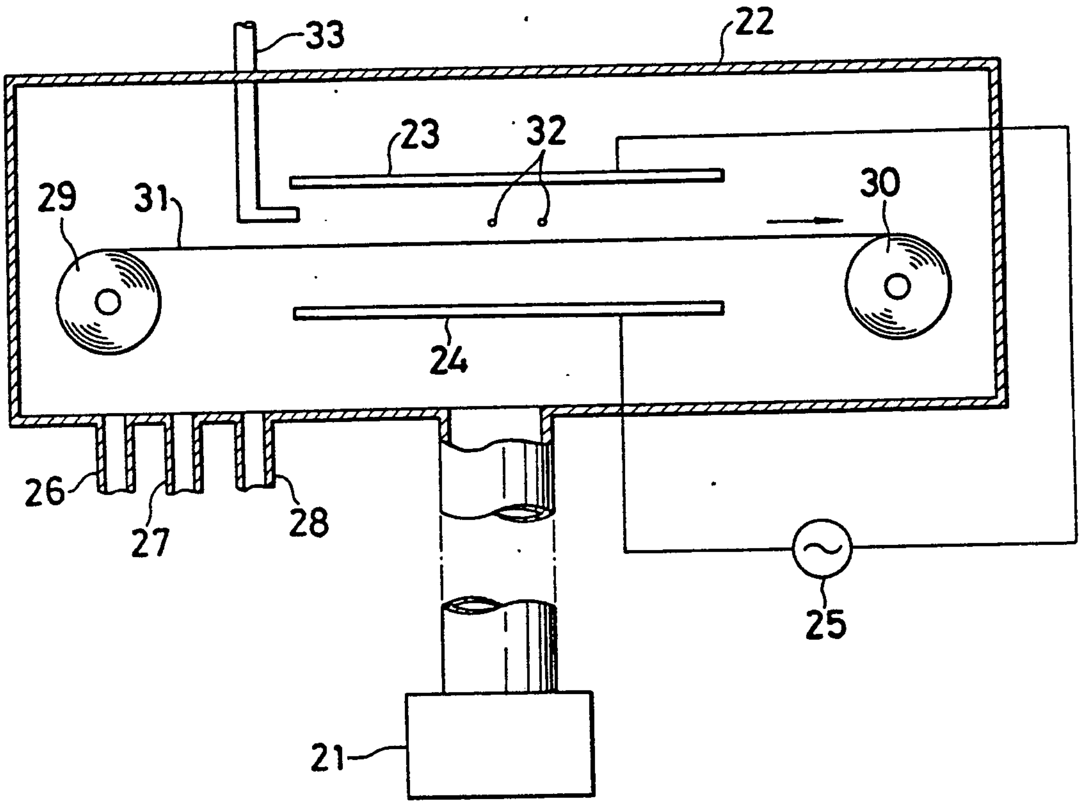

FIG. 3

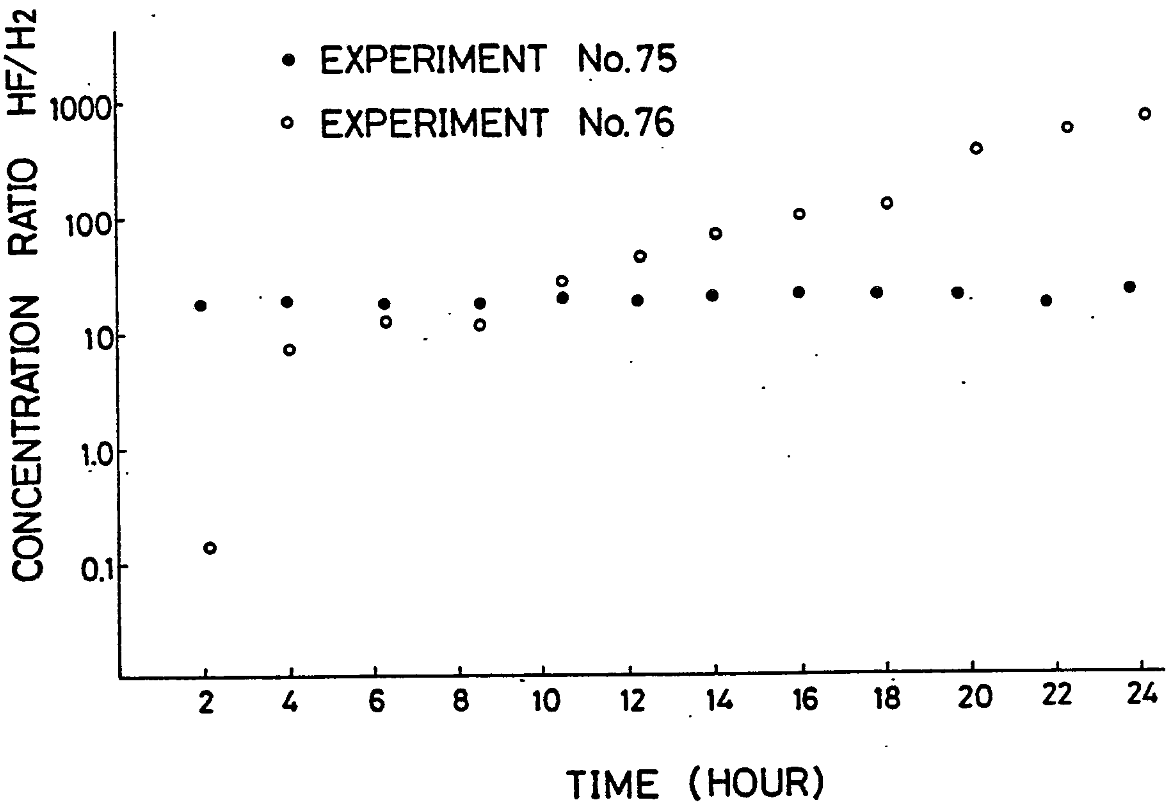

CONCENTRATION RATIO HF/H2
1000
100
10
1.0
0.1
• EXPERIMENT No.75
∘ EXPERIMENT No.76
2
4
6
8
10
12
14
16
18
20
22
24
TIME (HOUR)